# EUROPEAN PATENT SPECIFICATION

(11) **EP 3 914 024 B1**
(45) Date of publication and mention of the grant of the patent: **13.05.2026**
(21) Application number: 19909793.2
(22) Date of filing: 16.01.2019
(51) Int. Cl.: H04W 74/08, H04W 74/00

(54) **COMMUNICATIONS DEVICE, SECOND COMMUNICATIONS DEVICE, AND COMMUNICATIONS SYSTEM**
KOMMUNIKATIONSVORRICHTUNG, ZWEITE KOMMUNIKATIONSVORRICHTUNG UND KOMMUNIKATIONSSYSTEM
DISPOSITIF DE COMMUNICATION, SECOND DISPOSITIF DE COMMUNICATION, ET SYSTÈME DE COMMUNICATION

(43) Date of publication of application: 24.11.2021
(73) Proprietor: 1FINITY Inc., Kawasaki-shi, Kanagawa 211-8588 (JP)
(72) Inventor: OHTA, Yoshiaki, Kawasaki-shi, Kanagawa 211-8588 (JP); KAWASAKI, Yoshihiro, Kawasaki-shi, Kanagawa 211-8588 (JP); ODE, Takayoshi, Kawasaki-shi, Kanagawa 211-8588 (JP); AOKI, Nobuhisa, Kawasaki-shi, Kanagawa 211-8588 (JP)
(74) Representative: Haseltine Lake Kempner LLP
(86) International application number: PCT/JP2019/001010
(87) International publication number: WO 2020/148817

(56) References cited:
- EP-A1- 3 404 964
- EP-A1- 3 451 759
- WO-A1-2017/195721
- WO-A1-2017/195721
- JP-A- 2010 098 707
- JP-A- 2010 098 707
- US-A1- 2010 272 035
- US-A1- 2015 173 054
- US-A1- 2019 037 606
- ERICSSON: "General considerations in MT EDT", vol. RAN WG2, no. Spokane, USA; 20181112 - 20181116, 12 November 2018 (2018-11-12), XP051556205, Retrieved from the Internet <URL:http://www.3gpp.org/ftp/Meetings%5F3GPP%5FSYNC/RAN2/Docs/R2%2D1816635%2Ezip> [retrieved on 20181112]
- NEW POSTCOM: "Open issues of RACH on SCell", 3GPP DRAFT; R2-115302 OPEN ISSUES OF RACH ON SCELL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 2 October 2011 (2011-10-02), XP050540716, [retrieved on 20111002]
- INTERDIGITAL: "2-Step RACH Procedure", vol. RAN WG2, no. Chengdu, China; 20181008 - 20181012, 27 September 2018 (2018-09-27), XP051523471, Retrieved from the Internet <URL:http://www.3gpp.org/ftp/tsg%5Fran/WG2%5FRL2/TSGR2%5F103bis/Docs/R2%2D1814008%2Ezip> [retrieved on 20180927]
- INTERDIGITAL: "2-Step RACH Procedure", 3GPP TSG-RAN WG2 #103BIS R2-1814008, 27 September 2018 (2018-09-27), XP051523471

## Description

### [Field]

The present invention relates to a communication device, a second communication device, and a communication system.

### [Background Art]

In a current communication networks, the traffic of mobile terminals (smartphones and feature phones) accounts for a majority of the communication networks. Furthermore, the traffic used by the mobile terminals tends to expand.

Meanwhile, with the development of Internet of things (IoT) services (e.g., monitoring systems such as a traffic system, a smart meter, and a device), it has been demanded to cope with services including various requirement. Consequently, in the communication standard for the fifth generation mobile communication (5G or new radio (NR)), it has been demanded that, in addition to the fourth generation mobile communication (4G) (for example, NPLs 1 to 12), standard techniques, techniques, which achieve a higher data rate, a larger capacity, and lower latency. Note that, for the fifth generation communication standards, 3GPP working groups (such as, e.g., TSG-RAN WG1 and TSG-RAN WG2) have been making a progress on technical study and the first version was released in December 2017.(for example, NPLs 13 to 39).

In order to support various kinds of services as described, the 5G is assumed to support many use cases categorized, e.g., enhanced mobile broadband (eMBB), massive machine type communications (MTC), and ultra-reliable and low latency communication (URLLC).

Techniques relating to 5G are described in the following prior art documents.

### [Citation List]

### [Non-Patent Literature]

NPL 1: 3GPP TS 36.133 V15.3.0 (2018-06)
NPL 2: 3GPP TS 36.211 V15.2.0 (2018-06)
NPL 3: 3GPP TS 36.212 V15.2.1 (2018-07)
NPL 4: 3GPP TS 36.213 V15.2.0 (2018-06)
NPL 5: 3GPP TS 36.300 V15.2.0 (2018-06)
NPL 6: 3GPP TS 36.321 V15.2.0 (2018-07)
NPL 7: 3GPP TS 36.322 V15.1.0 (2018-07)
NPL 8: 3GPP TS 36.323 V15.0.0 (2018-07)
NPL 9: 3GPP TS 36.331 V15.2.2 (2018-06)
NPL 10: 3GPP TS 36.413 V15.2.0 (2018-06)
NPL 11: 3GPP TS 36.423 V15.2.0 (2018-06)
NPL 12: 3GPP TS 36.425 V15.0.0 (2018-06)
NPL 13: 3GPP TS 37.340 V15.2.0 (2018-06)
NPL 14: 3GPP TS 38.201 V15.0.0 (2017-12)
NPL 15: 3GPP TS 38.202 V15.2.0 (2018-06)
NPL 16: 3GPP TS 38.211 V15.2.0 (2018-06)
NPL 17: 3GPP TS 38.212 V15.2.0 (2018-06)
NPL 18: 3GPP TS 38.213 V15.2.0 (2018-06)
NPL 19: 3GPP TS 38.214 V15.2.0 (2018-06)
NPL 20: 3GPP TS 38.215 V15.2.0 (2018-06)
NPL 21: 3GPP TS 38.300 V15.2.0 (2018-06)
NPL 22: 3GPP TS 38.321 V15.2.0 (2018-06)
NPL 23: 3GPP TS 38.322 V15.2.0 (2018-06)
NPL 24: 3GPP TS 38.323 V15.2.0 (2018-06)
NPL 25: 3GPP TS 38.331 V15.2.1 (2018-06)
NPL 26: 3GPP TS 38.401 V15.2.0 (2018-06)
NPL 27: 3GPP TS 38.410 V15.0.0 (2018-06)
NPL 28: 3GPP TS 38.413 V15.0.0 (2018-06)
NPL 29: 3GPP TS 38.420 V15.0.0 (2018-06)
NPL 30: 3GPP TS 38.423 V15.0.0 (2018-06)
NPL 31: 3GPP TS 38.470 V15.2.0 (2018-06)
NPL 32: 3GPP TS 38.473 V15.2.1 (2018-07)
NPL 33: 3GPP TR 38.801 V14.0.0 (2017-03)
NPL 34: 3GPP TR 38.802 V14.2.0 (2017-09)
NPL 35: 3GPP TR 38.803 V14.2.0 (2017-09)
NPL 36: 3GPP TR 38.804 V14.0.0 (2017-03)
NPL 37: 3GPP TR 38.900 V15.0.0 (2018-06)
NPL 38: 3GPP TR 38.912 V15.0.0 (2018-06)
NPL 39: 3GPP TR 38.913 V15.0.0 (2018-06)

### [Patent Literature]

WO 2017/195721 A1 and EP 3451759 A1 disclose a user terminal that communicates using a first transmission time interval (TTI) and a second TTI which has a shorter TTI duration than the first TTI, and this user terminal has a receiving section that receives first downlink control information which is transmitted from a radio base station per first TTI, and second downlink control information which is transmitted in the second TTI, and a control section that controls simultaneous reception of first downlink data which is based on the first downlink control information, and second downlink data which is based on the second downlink control information, in a same carrier, based on a given condition.
JP 2010098707 A discloses a mobile station device in a mobile communication system, comprising a physical layer for performing information extraction processing of an uplink grant and a MAC layer for acquiring the uplink grant contained in a random access response and notifying the physical layer of the uplink grant, wherein, in a case where all bits of a resource allocation field included in the uplink grant contained in the random access response are 1, the MAC layer does not notify the physical layer of the uplink grant.

Another example can be found in non patent document ERICSSON: "General considerations in MT EDT",3GPP DRAFT; R2-1816635.

### [Summary of Invention]

### [Technical Problem]

In wireless communication system, it is expected to reduce the latency time in data signal communication. For example, a latency time assumed in 5G, which is intended to enable the handling of URLLC services, is expected in some cases. Therefore, for example, even when a data signal is occurred in a situation in which a terminal device and a base station device are out of synchronization, it is expected to reduce a latency time until the data signal is transmitted.

The disclosed technique is to provide a communication device, a second communication device, and a communication system that reduce a latency time until a data signal is transmitted.

### [Solution to Problem]

The invention is defined by the appended independent claims and further embodiments are described by the dependent claims.

### [Advantageous Effects of Invention]

According to one disclosure, the amount of latency until a data signal is transmitted may be reduced.

### [Brief Description of Drawings]

[FIG. 1] FIG. 1 is a diagram illustrating an exemplary structure of a base station device.
[FIG. 2] FIG. 2 is a diagram illustrating an exemplary structure of a communication system 10.
[FIG. 3] FIG. 3 is a sequence illustrating an example of a non-contention-based random access procedure.
[FIG. 4] FIG. 4 is a sequence illustrating an example of a contention-based random access procedure.
[FIG. 5] FIG. 5 is a diagram illustrating an exemplary structure of a base station device 200.
[FIG. 6] FIG. 6 is a diagram illustrating an exemplary structure of a terminal device 100.
[FIG. 7] FIG. 7 is a diagram illustrating an example of a sequence of a data transmission process in which the base station device 200 transmits data.
[FIG. 8] FIG. 8 is a diagram illustrating an example of comparison of sequences until data transmission is completed between a first scheme in FIG. 3 and the contention-based random access procedure in FIG. 4.
[FIG. 9] FIG. 9 is a diagram illustrating an example of a physical downlink shared channel (PDSCH) format (first format).
[FIG. 10] FIG. 10 is a diagram illustrating an example of a PDSCH format (second format).
[FIG. 11] FIG. 11 is a diagram illustrating an example of a PDSCH format (third format).
[FIG. 12] FIG. 12 is a diagram illustrating an example of a PDSCH format (fourth format).

### [Description of Embodiments]

Hereinafter, the present embodiments will be described in detail with reference to the drawings. Problems and embodiments in the present description are merely examples, and do not limit the scope of rights of the present application. In particular, as long as the described expressions are technically comparable even if different described expressions are used, the techniques of the present application may be applied to the different described expressions, and the scope of rights is not limited thereby.

### [First Embodiment]

First, a first embodiment will be described.

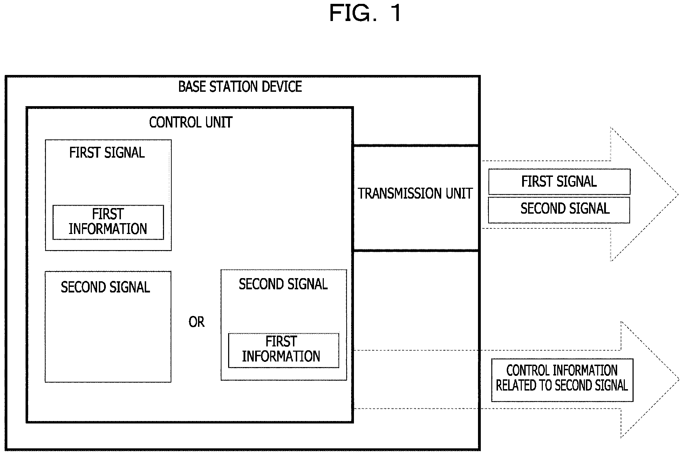

FIG. 1 is a diagram illustrating an exemplary structure of a base station device 20. The base station device 20 is, for example, a communication device, a transmission-side communication device, and a transmission-side device. The base station device 20 transmits a first signal, a second signal, and control information (control signal) to a transmission counterpart device (not illustrated).

The base station device 20 includes a transmission unit 21 and a control unit 22. The transmission unit 21 and the control unit 22 are constructed by, for example, a computer or a processor included in the base station device 20 loading and executing a program.

The base station device 20 executes a random access procedure when transmitting data to the transmission counterpart device. The random access procedure is a procedure that establishes a wireless connection for wireless communication executed between the base station device 20 and the transmission counterpart device. The random access procedure is executed for establishing synchronization when a data signal to be transmitted is occurred or a handover.

The base station device 20 is a device that transmits data. The base station device 20 transmits the first signal and the second signal. Furthermore, the base station device 20 transmits the control information related to the second signal to be transmitted.

The first signal is a signal used by the base station device 20 in the random access procedure and contains first information. The first information is information used for establishing a wireless connection in the random access procedure and, for example, includes information for identifying a counterpart communication device, and the like.

The second signal is a signal that is not used in the random access procedure and is, for example, a signal for transmitting data.

The control information related to the second signal is, for example, that indicates the type of information contained in the second signal. The base station device 20 incorporates, for example, information that the second signal contains the first information into the control information related to the second signal, and transmits the control information related to the second signal.

The transmission unit 21 is capable of transmitting the first signal and the second signal. The transmission unit 21 receives, for example, the first signal and the second signal generated by the control unit 22, and transmits the first signal and the second signal to the transmission counterpart device.

The control unit 22 can incorporate the first information into the second signal when generating the second signal. Then, the control unit 22 can transmit the control information related to the second signal (for example, indicating that the first information is contained) to the transmission counterpart device.

In the first embodiment, the base station device 20 incorporates the first information used in the random access procedure into the second signal and transmits the first information to the transmission counterpart device. This allows the base station device 20 to omit a part or the whole of the random access procedure (or to transmit data in parallel with the random access procedure or to start data communication in out of synchronous state), and to transmit data earlier.

### [Second Embodiment]

Next, a second embodiment will be described. The second embodiment may be regarded as a practical example in which the first embodiment is carried out concretely. For example, the base station device of the first embodiment may be regarded as equivalent to a base station device 200 of the present embodiment.

### <Exemplary Structure of Communication System>

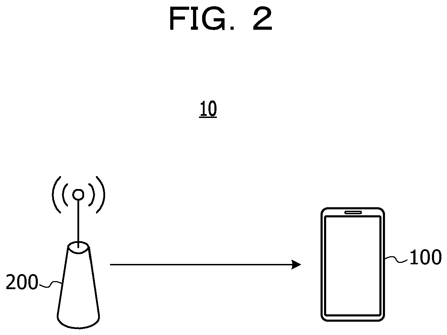

FIG. 2 is a diagram illustrating an exemplary structure of a communication system 10. The communication system 10 includes a terminal device 100 and the base station device 200. The communication system 10 is, for example, a communication system for wireless communication conforming to 5G. In this case, the base station device 200 is, for example, a gNodeB in 5G. Furthermore, the terminal device 100 is a device that communicates with the base station device 200 or with another communication device via the base station device 200, and is, for example, a mobile communication terminal such as a smartphone or a tablet terminal.

In the communication system 10, the base station device 200 and the terminal device 100 sometimes establish a wireless connection by the random access procedure when, for example, data is transmitted from the base station device 200 to the terminal device 100.

In the communication system 10, a channel for the random access procedure is prepared. In 3GPP, this is called a random access channel (RACH), and a procedure to start communication in accordance with the RACH is called the random access procedure. The RACH contains information called a preamble as information for the base station device to identify a wireless signal transmitted by the terminal device 100. By the information, the base station device 200 identifies the terminal device 100.

The random access procedure includes, for example, a contention-based random access procedure and a non-contention-based random access procedure.

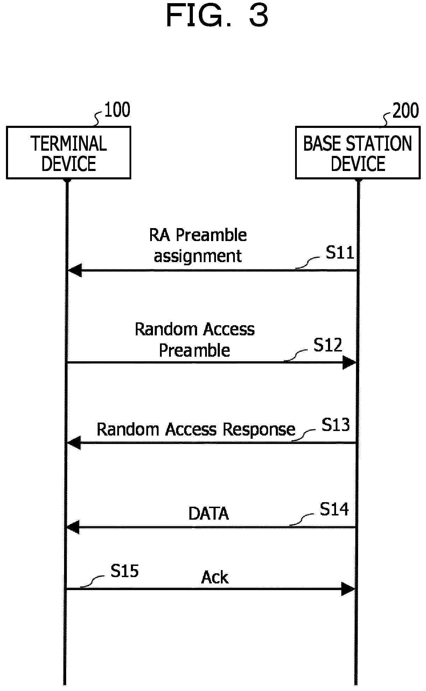

FIG. 3 is a sequence illustrating an example of the non-contention-based random access procedure. The base station device 200 transmits a dedicated preamble assigned to the terminal device 100 by random access preamble assignment (message 0) (S11). When receiving the message 0, the terminal device 100 transmits a random access preamble (message 1) to the base station device 200 by the RACH (S12). When receiving the message 1, the base station device 200 transmits a random access response (message 2), which is a response signal to the message 1, to the terminal device 100, together with a synchronization signal, a transmission grant, and the like for uplink communication (S13).

The base station device 200 uses a wireless resource established by the random access procedure to transmit data to the terminal device 100 (S14). When succeeding in receiving the data, the terminal device 100 returns an acknowledgement (ACK: affirmative response) signal to the base station device 200 (S15), because the uplink has transitioned to the synchronous state.

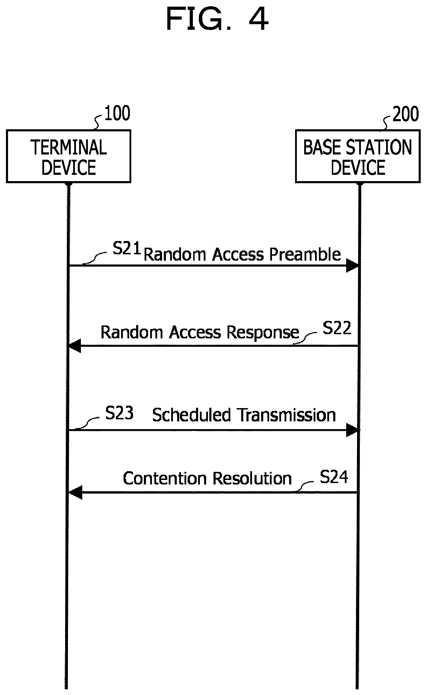

FIG. 4 is a sequence illustrating an example of a contention-based random access procedure. The terminal device 100 transmits a randomly selected preamble to the base station device 200 by the random access preamble (message 1) (S21). The base station device 200 transmits a random access response (message 2), which is a response to the message 1, to the terminal device 100, together with a synchronization signal, a transmission grant, and the like for uplink communication (S22). When the terminal device 100 receives the message 2, the terminal device 100 transmits scheduled transmission (message 3) containing a valid identifier of a terminal device, and the like to the base station device 200 (S23). When the base station 200 receives the message 3, the base station device 200 transmits contention resolution (message 4) to the terminal device 100 (S24).

Furthermore, in a random access procedure triggered by the base station device 200 (for example, the non-contention-based random access procedure), the base station device 200 sometimes incorporate a shared preamble into the message 0 apart from the dedicated preamble separately described above. When the shared preamble is contained, for example, the terminal device 100 selects the preamble and transmits the message 3 after receiving the message 2. Then, the message 4 is received from the base station device 200, and the state transitions to the synchronous state.

### <Exemplary Structure of Base Station Device>

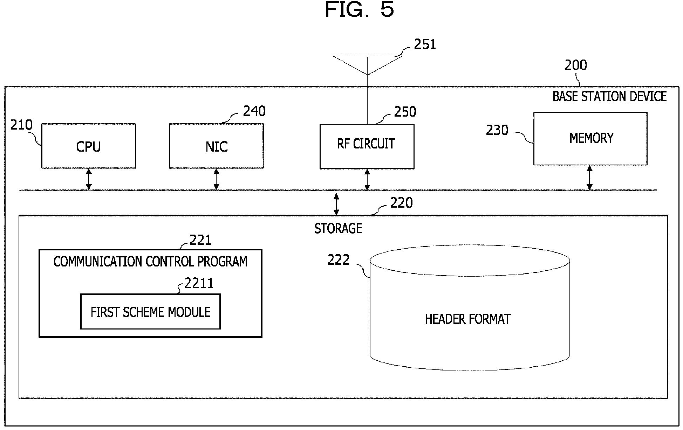

FIG. 5 is a diagram illustrating an exemplary structure of the base station device 200. The base station device 200 is, for example, a communication device, a transmission-side communication device, and a transmission-side device. The base station device 200 includes a central processing unit (CPU) 210, a storage 220, a memory 230 such as a dynamic random access memory (DRAM), a network interface card (NIC) 240, and a radio frequency (RF) circuit 250. The base station device 200 is a transmission device that, for example, transmits data to the terminal device 100.

The storage 220 is an auxiliary storage device that stores programs and data, such as a flash memory, a hard disk drive (HDD), or a solid state drive (SSD). The storage 220 stores a communication control program 221 and a header format 222.

The header format 222 is an area in which a physical downlink shared channel (PDSCH) format pattern to be described below is stored. The base station device 200 selects an appropriate PDSCH format from the header format 222.

The memory 230 is an area into which the program stored in the storage 220 is loaded. Furthermore, the memory 230 is also used as an area in which the program stores data.

The NIC 240 is a network interface that connects to a network (not illustrated) such as the Internet or an intranet. The base station device 200 communicates with a communication device connected to the network via the NIC 240.

The RF circuit 250 is a device wirelessly connected to the terminal device 100. The RF circuit 250 includes, for example, an antenna 251.

The CPU 210 is a processor or computer that implements each process by loading the program stored in the storage 220 into the memory 230 and executing the loaded program.

The CPU 210 constructs a transmission unit, a control unit, and a reception unit to perform a communication control process, by executing the communication control program 221. The communication control process is a process of controlling wireless communication with the terminal device 100.

The CPU 210 constructs a transmission unit, a control unit, and a reception unit to perform a first scheme process, by executing a first scheme module 2211 included in the communication control program 221. The first scheme process is a process of transmitting data by the first scheme to be described below, and is, for example, a process performed when data addressed to the terminal device 100 is produced. The base station device 200 selects, for example, a scheme for transmitting data according to the type of data and/or a wireless state, and performs the first scheme process when selecting the first scheme.

### <Exemplary Structure of Terminal Device>

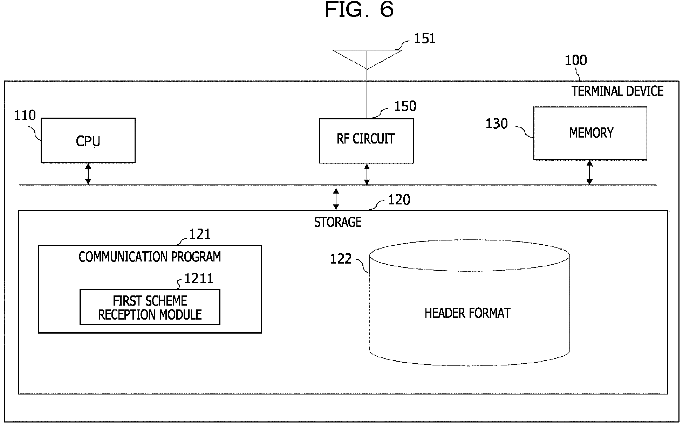

FIG. 6 is a diagram illustrating an exemplary structure of the terminal device 100. The terminal device 100 is, for example, a second communication device, a reception-side communication device, and a transmission counterpart device. The terminal device 100 includes a CPU 110, a storage 120, a memory 130 such as a DRAM, and an RF circuit 150. The terminal device 100 is a reception device that receives data from the base station device 200, for example.

The storage 120 is an auxiliary storage device that stores programs and data, such as a flash memory, an HDD, or an SSD. The storage 120 stores a communication program 121 and a header format 122. The header format 122 stores, for example, information similar to the header format 222 stored by the base station device 200.

The memory 130 is an area into which the program stored in the storage 120 is loaded. Furthermore, the memory 130 is also used as an area in which the program stores data.

The RF circuit 150 is a device wirelessly connected to the base station device 200. The RF circuit 150 includes, for example, an antenna 151.

The CPU 110 is a processor or computer that implements each process by loading the program stored in the storage 120 into the memory 130 and executing the loaded program.

The CPU 110 constructs a signal reception unit and a reception control unit to perform a communication process, by executing the communication program 121. The communication process is a process of performing wireless communication with the base station device 200.

The CPU 110 constructs a signal reception unit and a reception control unit to perform a first scheme reception process, by executing a first scheme reception module 1211 included in the communication program 121. The first scheme reception process is a process of receiving data by the first scheme to be described below. For example, when the terminal device 100 recognize that data is to be transmitted using the first scheme by a physical downlink control channel (PDCCH), the terminal device 100 can receive the data by the first scheme, by performing the first scheme reception process.

### <Data Transmission Process>

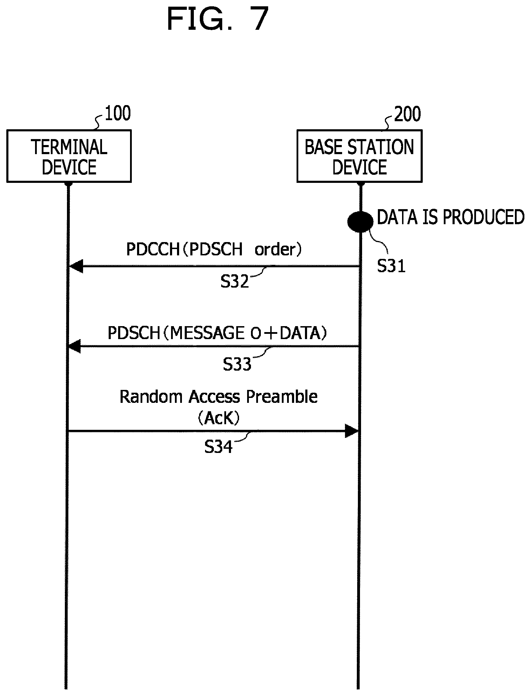

FIG. 7 is a diagram illustrating an example of a sequence of a data transmission process in which the base station device 200 transmits data. In the second embodiment, the base station device 200 can transmit data by the following data transmission process, apart from transmitting data using the random access procedure described above. In the second embodiment, a scheme in which a PDSCH order is defined and the PDSCH order is used is called the first scheme. Hereinafter, the first scheme will be described.

In the base station device 200, data to be transmitted to the terminal device 100 is occurred (S31). The base station device 200 transmits a message containing the fact that the PDSCH order is ongoing, by the physical downlink control channel (PDCCH) (S32). Note that, for example, a downlink control information (DCI) format (for example, DCI format 1_0 or DCI format 1_1) for the PDSCH can be used as the PDCCH format. The terminal device 100 receives that the PDSCH order is ongoing, and recognizes that message 0 and the data to the terminal device 100 are to be transmitted by the PDSCH.

Then, the base station device 200 transmits the message 0 and the data to the terminal device 100 by the PDSCH to the terminal device 100 (S33).

When the terminal device 100 receives the message 0 and the data addressed to the own device by the PDSCH, the terminal device 100 transmits the random access preamble (message 0) to the base station device 200 as an acknowledgement (ACK) indicating that the data addressed to the own device has been properly received.

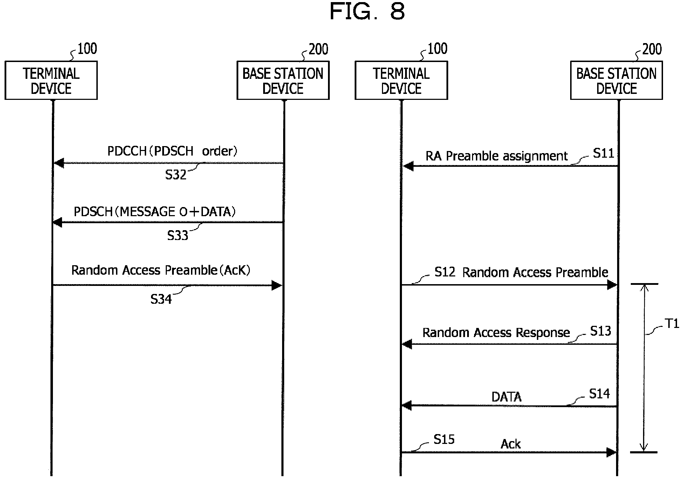

FIG. 8 is a diagram illustrating an example of comparison of sequences until data transmission is completed between the first scheme in FIG. 7 and the non-contention-based random access procedure in FIG. 3. FIG. 8 is a diagram illustrating an example of data transmission in the first scheme on the left and the non- contention-based access procedure on the right.

In the first scheme, the data transmission is completed at the timing of receiving the random access preamble (message 1) that comes next after the data is occurred in the base station device 200, at the earliest. On the other hand, in the non-contention-based random access procedure, at least data transmission and ACK reception occur after the timing of receiving the random access preamble (message 1), and thus the completion of data transmission is delayed by a time T1 as compared with the first scheme. Furthermore, in a non-contention-based random access procedure using a no-license-needed band (which can also be described as a non-licensed band or an unlicensed band), latency until the transmission is completed results in even larger time in a case where carrier sense occurs when each message is transmitted. When transmitting a signal (message or data) using a no-license-needed band, it is desired for a communication device such as a base station device or a terminal device to perform carrier sense and confirm that there is no signal (or data) in the no-license-needed band (equal to or less than predetermined reception power) before transmission. Therefore, if a larger number of messages are exchanged, the number of carrier senses is also larger, and thus latency until the transmission is completed increases accordingly (by the number of carrier senses).

### <Message Format>

### <1. First Format>

An example of the PDSCH message format in the first scheme will be described.

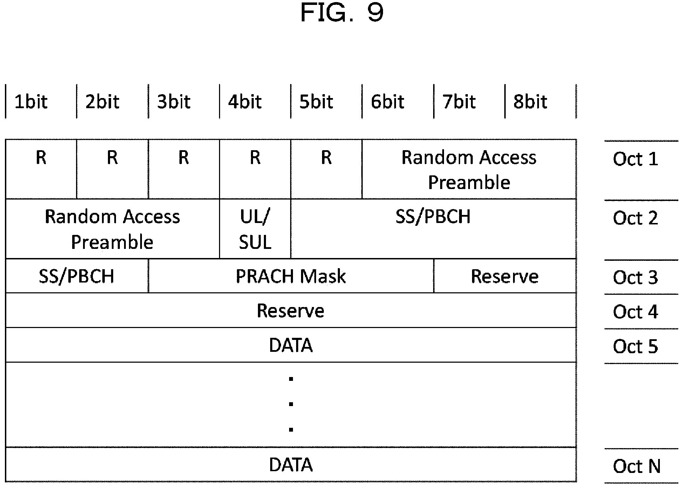

FIG. 9 is a diagram illustrating an example of the PDSCH format (first format). In the first format, the first to fifth bits of an octet 1 are consisted of reserved (R) fields.

In the first format, six bits from the sixth bit of the octet 1 to the third bit of an octet 2 are consisted of the random access preamble. The random access preamble indicates the number (identification number) of the random access preamble, where, for example, all zeros indicate that the random access preamble is shared, and a case other than all zeros indicates that the random access preamble is dedicated.

In the first format, one bit at the fourth bit of the octet 2 is consisted of an uplink (UL)/supplemental uplink (SUL) index. The UL/SUL index indicates whether or not SUL is to be used when the cell is set to SUL (for example, a carrier exclusive to uplink) in a case where the random access preamble is not zero.

In the first format, six bits from the fifth bit of the octet 2 to the second bit of an octet 3 are consisted of a synchronization signal (SS)/physical random access channel (PBCH) index. The SS/PBCH index is used to designate a resource to be set to the RACH for physical random access channel (PRACH) transmission.

In the first format, four bits from the third bit to the sixth bit of the octet 3 are consisted of a PRACH mask. The PRACH mask indicates whether or not the SS/PBCH index is to be masked.

In the first format, the seventh bit of the octet 3 to the eighth bit of an octet 4 are consisted of reserve bits.

Moreover, an octet 5 and subsequent octets in the first format are consisted of data portions.

The terminal device 100 that has received the PDSCH in the first format uses the random access preamble received in the first format as an ACK indicating that data has been correctly received by the received PDSCH, and transmits the random access preamble (third signal) to the base station device 200. The base station device 200 determines that the ACK has been received, in response to receiving the random access preamble corresponding to the random access preamble transmitted in the first format.

On the other hand, the terminal device 100 does not transmit the random access preamble when the data has failed to be received correctly by the received PDSCH (for example, when there is an error or the PDSCH fails to be received). The base station device 200 determines that a negative acknowledgement (NACK: negative response) indicating that the terminal device 100 has failed to receive the data correctly by the PDSCH has been received, in response to not receiving the random access preamble corresponding to the random access preamble transmitted in the first format within a predetermined time.

Note that the first format is a format obtained by porting DCI Format 1_0 to the PDSCH format on the premise that byte alignment is secured.

### <2. Second Format>

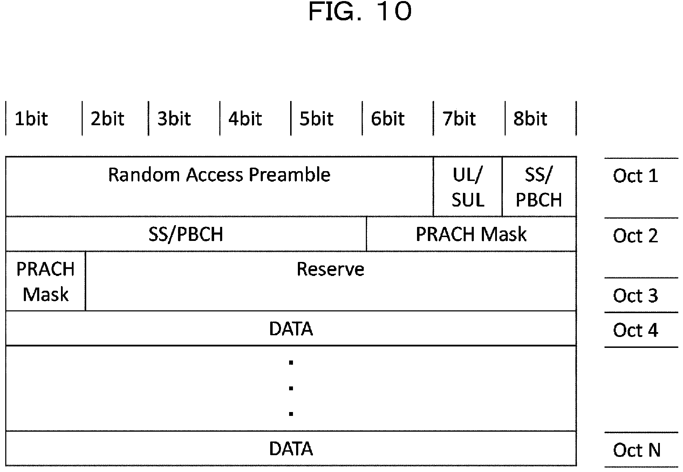

FIG. 10 is a diagram illustrating an example of the PDSCH format (second format). The second format is a format in which some or all of the R-fields and the reserve bits of the first format are omitted.

In the second format, six bits from the first to sixth bits of an octet 1 are consisted of the random access preamble.

In the second format, one bit at the seventh bit of the octet 1 is consisted of by the UL/SUL index.

In the second format, six bits from the eighth bit of the octet 1 to the fifth bit of an octet 2 are consisted of the SS/PBCH index.

In the second format, four bits from the sixth bit of the octet 2 to the first bit of an octet 3 are consisted of the PRACH mask.

In the second format, the second to eighth bits of the octet 3 are consisted of reserve bits.

Moreover, an octet 4 and subsequent octets in the second format are consisted of data portions.

As illustrated in FIG. 10, by omitting some or all of the R-fields and the reserve bits, data may be transmitted from the octet 4, and wireless resources may be used efficiently.

Note that, the operation of the ACK and the NACK from the terminal device 100 is similar to the operation in the first format.

### <3. Third Format>

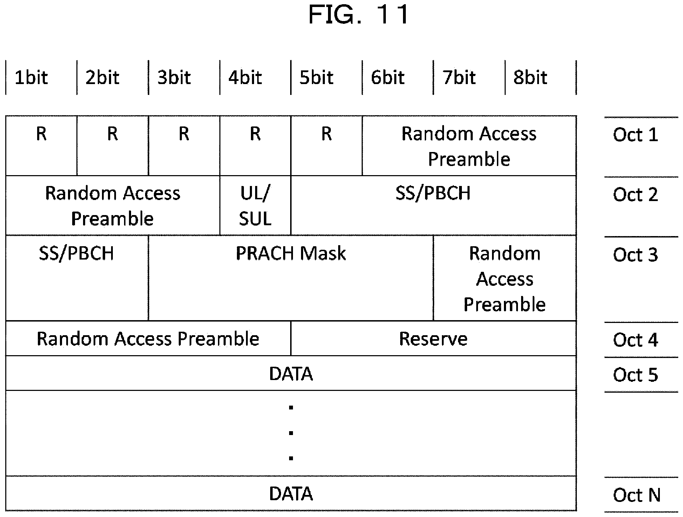

FIG. 11 is a diagram illustrating an example of the PDSCH format (third format). The third format is a format in which six bits from the seventh bit of the octet 3 to the fourth bit of the octet 4 in the first format are replaced with the random access preamble.

A six-bit of random access preamble (second information) from the seventh bit of an octet 3 to the fourth bit of an octet 4 in the third format is defined as a number (identification number) of the random access preamble for the NACK.

The terminal device 100 that has received the PDSCH in the third format uses the random access preamble that consists of the sixth bit of an octet 1 to the third bit of an octet 2 in the third format, as an ACK indicating that data has been received by the received PDSCH, and transmits the random access preamble to the base station device 200. The base station device 200 determines that the ACK has been received, in response to receiving the random access preamble corresponding to the random access preamble that consists of the sixth bit of the octet 1 to the third bit of the octet 2 in the third format.

On the other hand, when the terminal device 100 may not appropriately receive data by the PDSCH, the terminal device 100 uses the random access preamble that consists of the seventh bit of the octet 3 to the fourth bit of the octet 4 in the third format (the random access preamble defined for the NACK), and transmits the random access preamble to the base station device 200. The base station device 200 determines that the NACK has been received, in response to receiving the random access preamble defined for the NACK.

### <4. Fourth Format>

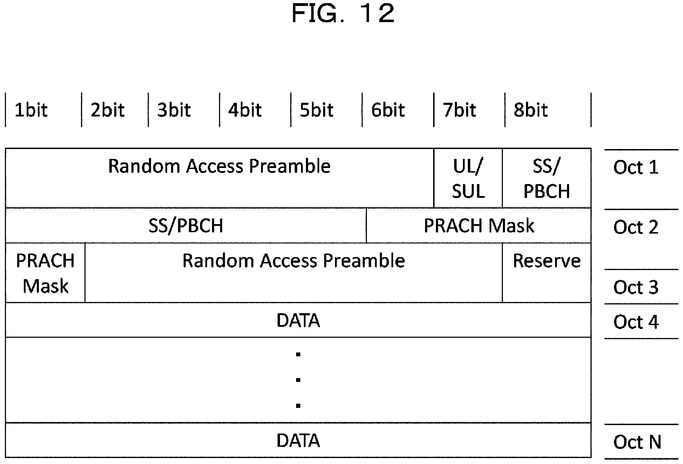

FIG. 12 is a diagram illustrating an example of the PDSCH format (fourth format). The fourth format is a format in which some or all of the R-fields and the reserve bits of the third format are omitted.

The fourth format has similar structure to the structure of the second format from the first bit of an octet 1 to the first bit of an octet 3.

In the fourth format, six bits from the second to seventh bits of the octet 3 are consisted of the random access preamble (for the NACK).

In the fourth format, the eighth bit of the octet 3 is consisted of a reserve bit.

Moreover, an octet 4 and subsequent octets in the second format are consisted of data portions.

As illustrated in FIG. 12, by omitting some or all of the R-fields and the reserve bits, data may be transmitted from the octet 4, and wireless resource may be used efficiently.

Note that, the operation of the ACK and the NACK from the terminal device 100 is similar to the operation in the third format.

### <Selection of Data Transmission Scheme>

The base station device 200 selects a data transmission scheme from a plurality of schemes including the first scheme described above when transmitting data to the terminal device 100.

The base station device 200 selects the data transmission scheme, for example, according to the type of data to be transmitted to the terminal device 100. The base station device 200 selects the first scheme when the latency time allowable for the data to be transmitted to the terminal device 100 is smaller than a predetermined value, as in URLLC data, for example.

Furthermore, the base station device 200 selects the data transmission scheme, for example, according to a wireless state. The base station device 200 selects the first scheme when the state of a wireless resource that transmits the PDSCH is as good as or better than a predetermined value (for example, the frame error rate is equal to or lower than a predetermined value, the transmission or reception power is equal to or higher than a predetermined value, or the like).

As a result, the base station device 200 may appropriately select the first scheme and may suppress the data transmission latency.

### <ACK/NACK Transmission in Terminal Device>

In schemes other than the first scheme, for example, the terminal device 100 transmits the ACK or NACK using a relatively high-quality channel such as a physical uplink control channel (PUCCH). However, in the first scheme, the terminal device 100 uses the random access preamble transmitted by the RACH to transmit the ACK or NACK. Therefore, in the base station device 200, the ACK or NACK reception quality sometimes deteriorates.

The terminal device 100 may repeat the transmission of the random access preamble a plurality of times in order to improve the probability that the ACK or NACK in the first scheme reaches the base station device 200. Either the base station device 200 or the terminal device 100 may determine whether or not the repeated transmission is executed and the number of repetitions. Furthermore, whether or not the repeated transmission is executed and the number of repetitions may be determined according to the wireless state or the past or current transmission success rate.

### [Other Embodiments]

The respective embodiments may be combined individually.

The terminal device 100 and the base station device 200 may handle only one of the first to fourth formats, or may handle a combination of two or more formats, for example.

### [Reference Signs List]

10 communication system
20 base station device
21 transmission unit
22 control unit
100 terminal device
110 CPU
120 storage
121 communication program
1211 first scheme reception module
130 memory
150 RF circuit
151 antenna
200 base station device
210 CPU
220 storage
221 communication control program
2211 first scheme module
222 header format
230 memory
250 RF circuit
251 antenna

## Claims

1. A communication device (200) configured to perform a random access procedure, the communication device (200) comprising:
a transmitter (250, 251) configured to transmit a first signal which is a signal of the random access procedure and a second signal which is not a signal of the random access procedure; and
**characterised by** a controller (210) configured to:
incorporate first information to be transmitted by the first signal into the second signal, and
the controller configured to control the transmitter (250, 251) to transmit information related to the second signal, the information related to the second signal indicating that the first information is contained in the second signal;
and wherein the controller (210) is configured to incorporate second information corresponding to a negative acknowledgement indicating that a transmission counterpart device (100) has failed to receive data into the second signal, and to control the transmitter (250, 251) to transmit the second information.

2. The communication device (200) according to claim 1, wherein
the first signal is random access preamble assignment,
the second signal is a physical downlink shared channel, PDSCH, and
the first information contains identification number of a random access preamble.

3. The communication device (200) according to claim 1, further comprising:
a receiver (250, 251) configured to receive a third signal [Msg3], which is a response signal of the random access procedure transmitted by the transmission counterpart device (100), as an acknowledgement indicating that the transmission counterpart device (100) has correctly received the second signal, wherein
the third signal is a random access preamble.

4. The communication device (200) according to claim 1, further comprising:
a receiver (250, 251) configured to receive a third signal [Msg3], which is a response signal of the random access procedure transmitted by the transmission counterpart device (100), as an acknowledgement indicating that the transmission counterpart device (100) has correctly received the second signal, wherein
the third signal is a random access preamble, and
the second information contains an identification number of the random access preamble that is different from the identification number of the random access preamble contained in the first information.

5. The communication device (200) according to claim 1, wherein
the second information contains information indicating a random access preamble corresponding to the negative acknowledgement in the second signal.

6. A second communication device (100) configured to carry out a random access procedure, the second communication device (100) comprising:
a signal receiver (150, 151) configured to receive a first signal which is a signal of the random access procedure and a second signal which is not a signal of the random access procedure transmitted by a transmission-side device (200);
**characterised by**
a controller (110) configured to:
recognize that the second signal contains first information, and the controller configured to receive information related to the second signal which is transmitted when the transmission-side device (100) transmits the second signal containing the first information to be transmitted by the first signal, the information related to the second signal indicating that the first information is contained in the second signal,
when correctly receiving the second signal containing the first information, the controller (110) is configured to control the second communication device (100) to transmit a third signal which is a response signal of the random access procedure and, wherein
the transmission-side device (200) further incorporates second information corresponding to a negative acknowledgement indicating that the second communication device (100) has failed to receive data into the second signal and transmits the second information, and
when having failed to receive the second signal including the first information correctly, the controller (110) is configured to incorporate the second information into the third signal and transmits the second information.

7. A communication system comprising:
the communication device (200) according to any of claims 1 to 5 and the second communication device (100) according to claim 6.

## Patentansprüche

1. Kommunikationsvorrichtung (200), die dazu konfiguriert ist, ein Direktzugriffsverfahren durchzuführen, wobei die Kommunikationsvorrichtung (200) Folgendes umfasst:
einen Sender (250, 251), der dazu konfiguriert ist, ein erstes Signal, das ein Signal des Direktzugriffsverfahrens ist, und ein zweites Signal, das kein Signal des Direktzugriffsverfahrens ist, zu übertragen; und
**dadurch gekennzeichnet, dass** eine Steuerung (210) dazu konfiguriert ist:
erste Information, die vom ersten Signal übertragen werden soll, in das zweite Signal einzubeziehen und
dass die Steuerung dazu konfiguriert ist, den Sender (250, 251) zu steuern, um Information zu senden, die das zweite Signal betrifft, wobei die Information, die das zweite Signal betrifft, angibt, dass die erste Information in dem zweiten Signal enthalten ist;
und wobei die Steuerung (210) dazu konfiguriert ist, zweite Information, die einer negativen Bestätigung entspricht, die angibt, dass eine Übertragungsgegenvorrichtung (100) keine Daten in das zweite Signal empfangen konnte, in das zweite Signal aufzunehmen und den Sender (250, 251) so zu steuern, dass er die zweite Information sendet.

2. Kommunikationsvorrichtung (200) nach Anspruch 1, wobei das erste Signal Direktzugriffspräambelzuweisung ist,
das zweite Signal ein physikalischer Downlink-Shared-Channel, PDSCH, ist und
die erste Information die Identifikationsnummer einer Direktzugriffspräambel enthält.

3. Kommunikationsvorrichtung (200) nach Anspruch 1, ferner umfassend:
einen Empfänger (250, 251), der dazu konfiguriert ist, ein drittes Signal [Msg3] zu empfangen, das ein Antwortsignal des von der Übertragungsgegenvorrichtung (100) gesendeten Direktzugriffsverfahrens ist, als Bestätigung, die angibt, dass die Übertragungsgegenvorrichtung (100) das zweite Signal korrekt empfangen hat, wobei
das dritte Signal eine Direktzugriffspräambel ist.

4. Kommunikationsvorrichtung (200) nach Anspruch 1, ferner umfassend:
einen Empfänger (250, 251), der dazu konfiguriert ist, ein drittes Signal [Msg3] zu empfangen, das ein Antwortsignal des von der Übertragungsgegenvorrichtung (100) gesendeten Direktzugriffsverfahrens ist, als Bestätigung, die angibt, dass die Übertragungsgegenvorrichtung (100) das zweite Signal korrekt empfangen hat, wobei
das dritte Signal eine Direktzugriffspräambel ist, und
die zweite Information eine Identifikationsnummer der Direktzugriffspräambel enthält, die sich von der in der ersten Information enthaltenen Identifikationsnummer der Direktzugriffspräambel unterscheidet.

5. Kommunikationsvorrichtung (200) nach Anspruch 1, wobei
die zweite Information Information enthält, die eine Direktzugriffspräambel angibt, die der negativen Bestätigung im zweiten Signal entspricht.

6. Kommunikationsvorrichtung (100), die dazu konfiguriert ist, ein Direktzugriffsverfahren auszuführen, wobei die Kommunikationsvorrichtung (100) Folgendes umfasst:
einen Signalempfänger (150, 151), der dazu konfiguriert ist, ein erstes Signal, das ein Signal des Direktzugriffsverfahrens ist, und ein zweites Signal, das kein Signal des Direktzugriffsverfahrens ist, übertragen von der übertragungsseitigen Vorrichtung (200), zu empfangen;
**dadurch gekennzeichnet, dass**
eine Steuerung (110) dazu konfiguriert ist:
zu erkennen, dass das zweite Signal erste Information enthält, und
dass die Steuerung dazu konfiguriert ist, Information empfangen, die das zweite Signal betrifft, die übertragen wird, wenn die übertragungsseitige Vorrichtung (100) das zweite Signal überträgt, das die erste Information enthält, die vom ersten Signal übertragen werden soll, wobei die Information, die das zweite Signal betrifft, angibt, dass die erste Information in dem zweiten Signal enthalten ist,
wenn das zweite Signal, das die erste Information enthält, korrekt empfangen wird, die Steuerung (110) dazu konfiguriert ist, die zweite Kommunikationsvorrichtung (100) so zu steuern, dass sie ein drittes Signal überträgt, das ein Antwortsignal des Direktzugriffsverfahrens ist, wobei
die übertragungsseitige Vorrichtung (200) ferner eine zweite Information aufnimmt, die einer negativen Bestätigung entspricht, die angibt, dass die zweite Kommunikationsvorrichtung (100) keine Daten in das zweite Signal empfangen konnte und die zweite Information sendet, und
wenn das zweite Signal, das die erste Information enthält, nicht korrekt empfangen werden konnte, die Steuerung (110) dazu konfiguriert ist, die zweite Information in das dritte Signal aufzunehmen und die zweite Information überträgt.

7. Kommunikationssystem, umfassend:
die Kommunikationsvorrichtung (200) nach einem der Ansprüche 1 bis 5 und die zweite Kommunikationsvorrichtung (100) nach Anspruch 6.

## Revendications

1. Dispositif de communication (200) configuré pour réaliser une procédure d'accès aléatoire, le dispositif de communication (200) comprenant :
un émetteur (250, 251) configuré pour transmettre un premier signal qui est un signal de la procédure d'accès aléatoire et un deuxième signal qui n'est pas un signal de la procédure d'accès aléatoire ; et
**caractérisé par** un dispositif de commande (210) configuré pour :
incorporer des premières informations à transmettre par le premier signal dans le deuxième signal, et
le dispositif de commande étant configuré pour commander l'émetteur (250, 251) afin de transmettre des informations relatives au deuxième signal, les informations relatives au deuxième signal indiquant que les premières informations sont contenues dans le deuxième signal ;
et dans lequel le dispositif de commande (210) est configuré pour incorporer dans le deuxième signal des secondes informations correspondant à un accusé de réception négatif indiquant qu'un dispositif homologue de transmission (100) n'a pas réussi à recevoir des données, et pour commander l'émetteur (250, 251) afin de transmettre les secondes informations.

2. Dispositif de communication (200) selon la revendication 1, dans lequel
le premier signal est une affectation de préambule d'accès aléatoire,
le deuxième signal est un canal partagé de liaison descendante physique, PDSCH, et
les premières informations contiennent un numéro d'identification d'un préambule d'accès aléatoire.

3. Dispositif de communication (200) selon la revendication 1, comprenant en outre :
un récepteur (250, 251) configuré pour recevoir un troisième signal [Msg3], qui est un signal de réponse de la procédure d'accès aléatoire transmis par le dispositif homologue de transmission (100), en tant qu'accusé de réception indiquant que le dispositif homologue de transmission (100) a correctement reçu le deuxième signal, dans lequel
le troisième signal est un préambule d'accès aléatoire.

4. Dispositif de communication (200) selon la revendication 1, comprenant en outre :
un récepteur (250, 251) configuré pour recevoir un troisième signal [Msg3], qui est un signal de réponse de la procédure d'accès aléatoire transmis par le dispositif homologue de transmission (100), en tant qu'accusé de réception indiquant que le dispositif homologue de transmission (100) a correctement reçu le deuxième signal, dans lequel
le troisième signal est un préambule d'accès aléatoire, et
les secondes informations contiennent un numéro d'identification du préambule d'accès aléatoire qui est différent du numéro d'identification du préambule d'accès aléatoire contenu dans les premières informations.

5. Dispositif de communication (200) selon la revendication 1, dans lequel
les secondes informations contiennent des informations indiquant un préambule d'accès aléatoire correspondant à l'accusé de réception négatif dans le deuxième signal.

6. Second dispositif de communication (100) configuré pour réaliser une procédure d'accès aléatoire, le second dispositif de communication (100) comprenant :
un récepteur de signal (150, 151) configuré pour recevoir un premier signal qui est un signal de la procédure d'accès aléatoire et un deuxième signal qui n'est pas un signal de la procédure d'accès aléatoire transmis par un dispositif côté transmission (200) ;
**caractérisé par**
un dispositif de commande (110) configuré pour :
reconnaître que le deuxième signal contient des premières informations, et
le dispositif de commande étant configuré pour recevoir des informations relatives au deuxième signal qui est transmis lorsque le dispositif côté transmission (100) transmet le deuxième signal contenant les premières informations à transmettre par le premier signal, les informations relatives au deuxième signal indiquant que les premières informations sont contenues dans le deuxième signal,
lors de la réception correcte du deuxième signal contenant les premières informations, le dispositif de commande (110) est configuré pour commander le second dispositif de communication (100) afin de transmettre un troisième signal, qui est un signal de réponse de la procédure d'accès aléatoire, et dans lequel
le dispositif côté transmission (200) incorpore en outre des secondes informations correspondant à un accusé de réception négatif indiquant que le second dispositif de communication (100) n'a pas réussi à recevoir des données dans le deuxième signal et transmet les secondes informations, et
lorsqu'il n'a pas réussi à recevoir correctement le deuxième signal comportant les premières informations, le dispositif de commande (110) est configuré pour incorporer les secondes informations dans le troisième signal et transmet les secondes informations.

7. Système de communication comprenant :
le dispositif de communication (200) selon l'une quelconque des revendications 1 à 5 et le second dispositif de communication (100) selon la revendication 6.
